# EUROPÄISCHE PATENTSCHRIFT

(11) **EP 2 876 638 B1**
(45) Veröffentlichungstag und Bekanntmachung des Hinweises auf die Patenterteilung: **02.05.2018**
(21) Anmeldenummer: 14194123.7
(22) Anmeldetag: 20.11.2014
(51) Int. Cl.: G10K 11/168, B32B 5/02, B32B 5/26, B60R 13/08, E04F 13/08, E04B 1/86, B32B 5/00, B32B 5/20, B32B 7/12, B32B 9/00, B32B 9/04, B32B 5/22, B32B 7/02

(54) **Schalldämpfende Sandwichplatte**
Noise insulation sandwich board
Plaque sandwich antisonique

(30) Priorität: 26.11.2013 DE 102013224145
(43) Veröffentlichungstag der Anmeldung: 27.05.2015
(73) Patentinhaber: Faist Chem Tec GmbH, 67547 Worms (DE)
(72) Erfinder: Becker, Jean Georges, 67551 Worms (DE); Hardt, Christian, 65451 Kelsterbach (DE); Lieutenant, Bernd, 54314 Baldringen (DE)
(74) Vertreter: Müller Schupfner & Partner Patent- und Rechtsanwaltspartnerschaft mbB

(56) Entgegenhaltungen:
- EP-A1- 2 039 841
- WO-A1-2007/047263
- DE-A1- 3 416 511
- DE-A1- 19 512 582
- DE-A1-102010 034 478
- US-A1- 2005 103 564
- US-A1- 2008 001 431
- US-A1- 2013 112 499

## Beschreibung

Die Erfindung betrifft eine schalldämpfende Sandwichplatte zur Anbringung an ein Bauteil gemäß dem Oberbegriff des Anspruchs 1.

Sandwichplatten der genannten Art, welche auch als schalldämmende Sandwichplatten bezeichnet werden können, sind grundsätzlich bekannt. Sie werden insbesondere zur Verbesserung der akustischen Eigenschaften eines Bauteils eingesetzt, insbesondere zur Entdröhnung und/oder Schallisolierung eines Blechs. Schalldämpfende Sandwichplatten werden beispielsweise zur Schalldämpfung bzw. Entdröhnung eines Kraftfahrzeugblechs oder der Wandung eines Haushaltsgeräts eingesetzt. Die Sandwichplatten werden hierzu üblicherweise vollflächig auf das entsprechende Bauteil aufgeklebt.

Sowohl im Kraftfahrzeugbereich als auch im Haushaltsgerätebereich wird zunehmend neben einer guten Schallisolierung bzw. Entdröhnung eine gute Wärmeisolierung gefordert. Durch eine gute Wärmeisolierung lässt sich insbesondere die Effizienz elektrischer Haushaltsgeräte, beispielsweise von Wasch- oder Spülmaschinen, verbessern. Bei Spülmaschinen besteht beispielsweise ein bekannter Weg der Verbesserung der Energieeffizienz darin, auf einen Teil bekannter Entdröhnungsplatten zu verzichten, nämlich insbesondere eine üblicherweise vorgesehene Bitumenschwerfolie, und diese gegebenenfalls durch eine wärmeisolierende Schicht zu ersetzen. Durch den Verzicht auf die Entdröhnungsschicht werden aber die akustischen Eigenschaften des Geräts verschlechtert.

Die US 2008/0001431 A1 offenbart eine Sandwich Konstruktion, umfassend mehrere Schichten, zur Schallisolierung. Die Platte kann beispielsweise mittels eines Klettverschlusses an einer anderen Komponente befestigt werden.

Die WO 2007/047263 A1 offenbart ebenfalls Sandwichplatten zur Schallisolierung. Eine der Schichten umfasst dabei Polymerfasern mit einem Durchmesser von weniger als 1 µm.

Die US 2013/0112499 A1 offenbart einen Verbundwerkstoff mit Schichten aus einem Textil oder Vliesstoff.

Die DE 34 16 511 A1 betrifft eine Vorrichtung zur Verkleidung von Flächen, insbesondere von Decken und Innen- und Außenwänden von Gebäuden, als querschnittlich im Wesentlichen U-förmiges Kunststoff oder Metallpanel.

Die DE 195 12 582 A1 betrifft Auskleidungen von Wänden, Decken und Böden von Raumschießanlagen sowie Trennvorrichtungen für Raumschießelanlagen.

Die DE 10 2010 034 478 A1 behandelt die Luftschalldämpfung in Büros und ähnlichen Räumlichkeiten. Vorgeschlagen wird ein quaderförmiges, schachtelartiges Schalldämpfungselement mit einem an der Wand befestigten Teil als Korpus und einem darüber gesteckten, und einrastbaren Rahmenteil als Deckel, wobei der Trägerteil aus einem Boden und zumindest zwei Seitenwänden besteht, der Rahmen gleichen Umriss aufweist, mittels Federrasten auf dem Trägerteil spielfrei gehalten und positioniert wird und mit einem akustisch wirksamen Material überzogen ist, und im Trägerteil oder auch im Rahmenteil akustisch wirksame Plattenmaterialien, vorzugsweise Schaumstoffe, Faserstoffe etc. befestigt sind.

Der Erfindung liegt die Aufgabe zugrunde, eine schalldämpfende Sandwichplatte zur Verfügung zu stellen, die gute thermische Eigenschaften mit einer effizienten Schalldämmung bzw. Schalldämpfung verbindet.
Die Aufgabe wird erfindungsgemäß durch eine Sandwichplatte mit den Merkmalen des Anspruchs 1 gelöst. Bevorzugte Ausgestaltungen und Merkmale der Erfindung sind in den abhängigen Ansprüchen sowie in der nachfolgenden Beschreibung, insbesondere im Zusammenhang mit der beiliegenden Zeichnung, angegeben.

Erfindungsgemäß weist die schalldämpfende Sandwichplatte eine erste Schicht und eine mit der ersten Schicht, flächig verbundene zweite Schicht auf. Jedenfalls teilweise, flächig entlang der zweiten Schicht ist mindestens ein Befestigungsteil vorgesehen, welches eine Vielzahl von Eingriffselementen aufweist, die mit der zweiten Schicht in Eingriff bringbar sind und hierbei insbesondere in die zweite Schicht hineinragen. Durch die in die zweite Schicht eingreifenden Eingriffselemente wird eine formschlüssige Verbindung zwischen dem Befestigungsteil und der zweiten Schicht hergestellt.

Das Befestigungsteil ist dazu vorgesehen, ein Plattenteil der Sandwichplatte, welches die erste und die zweite Schicht umfasst, an dem akustisch zu verbessernden Bauteil zu befestigen. Hierzu wird das Befestigungsteil einerseits an der zweiten Schicht befestigt, nämlich durch Eingreifen der Eingriffselemente in die zweite Schicht, und andererseits an dem akustisch zu verbessernden Bauteil. Das Befestigungsteil bildet also eine Zwischenschicht zwischen dem Plattenteil der Sandwichplatte und dem Bauteil, welche auch als dritte Schicht bezeichnet werden kann. Die Verbindung zwischen Befestigungsteil und Plattenteil ist mechanisch, nicht-klebend, und lösbar. Entgegen der allgemeinen Lehre, dass für eine effiziente Entdröhnung eine Entdröhnungsplatte wie eine Sandwichplatte aus fest miteinander verbundenen Schichten vollflächig mit dem Bauteil zu verkleben ist, hat sich überraschenderweise gezeigt, dass auch durch eine formschlüssige Verbindung der zweiten Schicht, welche insbesondere und maßgeblich der thermischen Isolierung dient, mit einem an dem Bauteil befestigbaren Befestigungsteil eine besonders gute Kombination von thermischen und schalldämpfenden Eigenschaften erreichen lässt. Dies kann damit erklärt werden, dass sich durch das flächenförmige Befestigungsteil mit den einzelnen in die zweite Schicht hineinragenden Eingriffs- oder Formschlusselementen bei gleicher Dicke der Sandwichplatte ein geringeres Flächengewicht erreichen lässt als bei einer Verklebung der zweiten Schicht mit dem Bauteil. Auf diese Weise wird die thermische Isolierung verbessert. Die dem Bauteil zugewandte, zweite Schicht weist aus akustischen und thermischen Gründen üblicherweise eine Vielzahl von Hohlräumen auf. Dies hatte im Stand der Technik eine vergleichsweise dicke Klebeschicht erfordert, welche kaum einen Beitrag zur Isolierung leistet. Aufgrund der erfindungsgemäßen mechanischen, nichtklebenden Verbindung ist diese nicht mehr erforderlich. Zudem können die verbesserten thermischen Eigenschaften darauf zurückgeführt werden, dass - anders als bei einer Verklebung der zweiten Schicht mit dem Bauteil - in der zweiten Schicht vorhandene Poren nicht durch einen Klebstoff verschlossen werden. Es ist auch möglich, das flächenförmige Befestigungsteil mehrfach, über die Fläche der Sandwichplatte verteilt, anzubringen, z.B. durch runde oder eckige Pads, die in ihrer Ausdehnung etwa nur 1 - 10%, bevorzugt 5% der Fläche der Sandwichplatte aufweisen. 1 - 100, bevorzugt 5 - 20 Pads reichen für eine sichere Befestigung aus.

Die erste Schicht ist auf einer dem Bauteil abgewandten Seite der zweiten Schicht angeordnet und dient insbesondere einer Entdröhnung des Bauteils und weist hierzu ein größeres Flächengewicht und/oder eine größere Dichte auf als die zweite Schicht. Die erste und die zweite Schicht sind vorzugsweise fest, also nicht-lösbar, miteinander verbunden. Erfindungsgemäß wird bei einer Verbindung des Befestigungsteils mit der zweiten Schicht insbesondere eine Klettverbindung hergestellt. Die Eingriffselemente des Befestigungsteils, welche auch als Kletteinrichtungen oder Klettelemente bezeichnet werden können, sind hierzu insbesondere hintergreifende Elemente, wie beispielsweise Haken und/oder Pilzköpfe. Die Eingriffselemente sind dazu eingerichtet, durch Hintergreifen von Strukturen der zweiten Schicht eine nicht-klebende mechanische, insbesondere formschlüssige Verbindung zwischen der zweiten Schicht und dem Befestigungsteil herzustellen. Vorzugsweise sind die Eingriffselemente derart gestaltet, dass eine möglichst positionsstabile, also unbewegliche Verbindung, geschaffen wird. Gleichsam bildet die formschlüssige Verbindung eine lösbare Verbindung, so dass der aus erster und zweiter Schicht sowie gegebenenfalls weiteren Schichten bestehende Plattenteil wiederholt von dem Befestigungsteil gelöst und erneut an diesem befestigt werden kann. Die lösbare Verbindung zwischen Plattenteil und Befestigungsteil bietet den Vorteil, dass das Plattenteil besonders einfach ausgetauscht und gegebenenfalls durch ein anderes ersetzt werden kann. Befestigungsteil und zweite Schicht bilden in ihrem Zusammenwirken vorzugsweise einen Klettverschluss, bei welchem das Befestigungsteil vorzugsweise ein Hakenteil und die zweite Schicht ein Flauschteil bildet.

Ein erfindungsgemäßer Aspekt kann darin gesehen werden, dass die zweite Schicht der Sandwichplatte gleichsam eine Isolierschicht und einen Teil eines Klett- oder Hakenverschlusses bildet. Hierzu ist es erfindungsgemäß bevorzugt, dass die zweite Schicht aus einem Faserstoff, insbesondere einem Vlies bzw. Vliesstoff, gebildet ist. Ein Vliesstoff weist zum einen gute Dämmeigenschaften auf und stellt zum anderen aufgrund seiner Vielzahl von ungeordneten Fasern eine geeignete Verhakungsschicht für die hintergreifenden Eingriff- oder Formschlusselemente dar.
Die Befestigung des Befestigungsteils an dem akustisch zu verbessernden Bauteil erfolgt in einer bevorzugten Ausführungsform der Erfindung durch Verkleben. Hierzu ist es bevorzugt, dass die Eingriffselemente an einer ersten Seite des Befestigungsteils vorgesehen sind und dass das Befestigungsteil an einer gegenüberliegenden zweiten Seite mit einer Klebeschicht versehen ist. Die Klebeschicht kann insbesondere vollflächig an der dem Bauteil zugewandten Seite des Befestigungsteils vorhanden sein, so dass sich das Befestigungsteil vollflächig auf das Bauteil aufkaschieren lässt. Das Befestigungsteil kann insbesondere mit einer selbstklebenden Rückseite versehen sein. Für eine möglichst dünne Klebeschicht weist das Befestigungsteil vorzugsweise eine weitgehend glatte Oberfläche beziehungsweise Rückseite auf.
Um einen Kontakt der Klebeschicht mit der zweiten Schicht der Sandwichplatte zu verhindern, umfasst das Befestigungsteil vorzugsweise zwischen den Eingriffselementen und der Klebeschicht ein flächenförmiges Element, beispielsweise eine Folie oder ein textiles Flächengebilde. Die Folie bzw. das Flächengebilde kann auf seiner den Eingriffselementen gegenüberliegenden Seite insbesondere mit einer Haftklebeschicht versehen sein und ist vorzugsweise für den Kleber der Klebeschicht undurchlässig. Die Eingriffselemente sind an der der zweiten Schicht zugewandten Seite des flächenförmigen Elements angeordnet.
In einer bevorzugten Ausführungsform ist das Befestigungsteil als selbstklebendes Klettband oder Hakenband oder als selbstklebende Klett- oder Hakenfolie ausgebildet. Auf diese Weise lässt sich das Befestigungsteil besonders einfach, ohne einen zusätzlich aufzutragenden Kleber, an dem akustisch zu verbessernden Bauteil befestigen. Das so vorbereitete Bauteil lässt sich dann besonders einfach und schnell mit dem akustisch- und thermisch wirksamen Plattenteil (insbesondere erste und zweite Schicht) versehen.

Im Hinblick auf die zu erreichenden thermischen und akustischen Eigenschaften kann es von Vorteil sein, dass sich das Befestigungsteil vollflächig entlang der zweiten Schicht, der dem Bauteil zugewandten Seite der zweiten Schicht, erstreckt. Die zweite Schicht der Sandwichplatte lässt sich dann vollflächig an dem Bauteil befestigen, nämlich insbesondere durch eine vollflächige formschlüssige Verbindung, insbesondere Verhakung, zwischen der zweiten Schicht und dem Befestigungsteil. Zusätzlich kann eine vollflächige Verklebung des Befestigungsteils an dem Bauteil vorgesehen sein.
Alternativ kann es auch vorteilhaft sein, dass das Befestigungsteil einzelne, vorzugsweise gleichmäßig verteilte, Befestigungsstreifen und/oder Schichtstücke aufweist. Das beispielsweise aus einer Mehrzahl von Klettbändern bestehende Befestigungsteil ermöglicht, insbesondere bei einer großflächigen Sandwichplatte, aufgrund der reduzierten Klebefläche eine einfache Montage. Zudem kann durch eine gezielte Anordnung einzelner Klebeflächen Einfluss auf die akustischen Eigenschaften genommen werden.

Im Hinblick auf gute Entdröhnungseigenschaften ist die erste Schicht der Sandwichplatte vorzugsweise aus einer Bitumenschicht gebildet. Die Dicke der Bitumenschicht beträgt vorzugsweise maximal 2 mm, insbesondere maximal 1 mm. Die Dicke der zweiten Schicht, welche auch als Thermoisolierschicht bezeichnet werden kann, ist vorzugsweise größer als die Dicke der ersten Schicht und beträgt vorzugsweise maximal 5 mm, insbesondere maximal 3 mm.

Grundsätzlich kann die Sandwichplatte insgesamt eine formsteife Platte sein. Vorzugsweise ist die Platte jedoch als flexible, nicht-starre Platte ausgeführt und kann grundsätzlich auch als Folie bezeichnet werden. Das Plattenteil der Sandwichplatte bildet vorzugsweise eine Einheit aus fest miteinander verbundenen, flexiblen Schichten. Das Befestigungsteil ist vorzugsweise ein flexibles Klettband oder Klettelement, welches lösbar mit dem Plattenteil verbunden werden kann.

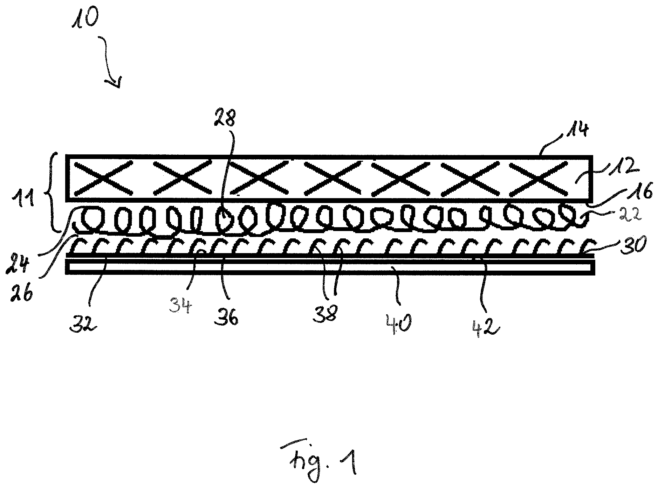

Die Erfindung wird nachfolgend anhand eines Ausführungsbeispiels näher beschrieben, welches in der beiliegenden, schematischen Zeichnung dargestellt ist. Es zeigt die einzige
Fig. 1 eine Querschnittsansicht einer erfindungsgemäßen Sandwichplatte.

Die erfindungsgemäße Sandwichplatte 10 umfasst ein schalldämpfendes und thermisch isolierendes Plattenteil 11, welches eine erste, insbesondere äußere, Schicht 12 sowie eine zweite, insbesondere innere, Schicht 22 umfasst. Die erste Schicht 12 dient maßgeblich der Entdröhnung eines Bauteils 40, an welchem die Sandwichplatte 10 befestigt ist, und ist hierzu durch eine Bitumenfolie oder Bitumenschicht gebildet bzw. besteht hieraus. Die zweite Schicht 22 dient neben akustischen Zwecken insbesondere der thermischen Isolierung des Bauteils 40 und ist vorzugsweise aus Vliesmaterial gebildet ist bzw. besteht hieraus. Für eine gute thermische Isolierung ist die zweite Schicht 22 mit einer Vielzahl von Hohlräumen 28 versehen. Sie weist eine geringere Dichte und/oder eine geringere Massenbelegung auf als die erste Schicht 12 und ist quer zur Flächenausdehnung der Sandwichplatte 10 elastisch, sodass durch die Kombination der ersten Schicht 12 und zweiten Schicht 22 ein Feder-Masse-System gebildet wird. Die erste Schicht 12 ist vorzugsweise zumindest weitgehend porenfrei.

Die erste Schicht 12 umfasst eine erste, nach außen weisende Seite 14 und eine zweite, dem Bauteil 40 zugewandte Seite 16. Die zweite Schicht 22 ist fest mit der ersten Schicht 12 verbunden und umfasst eine erste, nach außen und in Richtung der ersten Schicht 12 weisende Seite 24 sowie eine zweite, dem Bauteil 40 zugewandte Seite 26.

Das aus der ersten Schicht 12 und der zweiten Schicht 22 gebildete Plattenteil 11 der Sandwichplatte 10 ist mittels eines Befestigungsteils 30 an einer Oberfläche 42 des Bauteils 40 befestigt. Das Befestigungsteil 30 ist als Hakenband oder Klettband oder als Haken- bzw. Klettfolie ausgebildet und kann insbesondere selbstklebend sein. Bei dem Bauteil 40 kann es sich insbesondere um ein Blech handeln, welches beispielsweise aus Stahl, Edelstahl, Aluminium und/oder Kunststoff gebildet sein kann.

Das Befestigungselement 30 umfasst ein flächenförmiges Element 32, beispielsweise ein textiles Flächengebilde oder eine Folie, mit einer ersten, der zweiten Schicht 22 zugewandten Seite 34 und einer zweiten, dem Bauteil 40 zugewandten Seite 36. An der ersten Seite 34 sind eine Vielzahl von hakenförmigen Eingriffselementen 38 ausgebildet, die einzeln von dem Element 32 hervorragen und derart gestaltet sind, dass sie sich in dem Vliesmaterial der zweiten Schicht 22 (Isolierschicht) der Sandwichplatte 10 verhaken können, um das Befestigungselement 30 an der zweiten Schicht 22 positionsfest zu halten. Die Eingriffselementen 38 sind insbesondere als Kletteinrichtungen gestaltet, beispielsweise als Kletthaken oder Klettköpfe, und hintergreifen die Faserstrukturen des Vliesmaterials. An seiner an dem Bauteil 40 anliegenden, zweiten Seite 36 ist das Befestigungselement 30 mit einer Klebeschicht versehen, um das Befestigungselement 30 auf eine Oberfläche 42 des Bauteils 40 aufzukleben. Die erste Seite 34 ist kleberfrei.

Durch die Erfindung wird eine Sandwichplatte 10 bereitgestellt, welche aufgrund eines Sandwichaufbaus Entdröhnungs- und Schalldämpfungseigenschaften mit thermischen Isolationseigenschaften verbindet, wobei durch das erfindungsgemäße Befestigungsteil 30 bei gleichen thermischen Eigenschaften die akustischen Eigenschaften verbessert bzw. bei gleichen akustischen Eigenschaften die thermischen Eigenschaften verbessert werden können. Die erfindungsgemäße Sandwichplatte 10 eignet sich insbesondere zum Einsatz bei Spülmaschinen, welche sowohl hinsichtlich der Akustik als auch der thermischen Isolierung hohe Anforderungen stellen.

### Bezugszeichenliste:

- 10: Sandwichplatte
- 11: Plattenteil
- 12: erste Schicht
- 14: erste Seite
- 16: zweite Seite
- 22: zweite Schicht
- 24: erste Seite
- 26: zweite Seite
- 28: Hohlraum
- 30: Befestigungsteil
- 32: flächenförmiges Element
- 34: erste Seite
- 36: zweite Seite
- 38: Eingriffselemente
- 40: Bauteil
- 42: Oberfläche

## Patentansprüche

1. Schalldämpfende Sandwichplatte zur Anbringung an einem Bauteil (40), zur Entdröhnung des Bauteils (40), aufweisend
eine erste Schicht (12) und
eine mit der ersten Schicht (12) verbundene zweite Schicht (22), wobei die erste Schicht (12) auf der dem Bauteil (40) abgewandten Seite der zweiten Schicht (22) angeordnet ist,
**dadurch gekennzeichnet,**
**dass** jedenfalls teilsweise, flächig entlang der zweiten Schicht (22) mindestens ein Befestigungsteil (30) vorgesehen ist, welches eine Vielzahl von Eingriffselementen (38) aufweist, die mit der zweiten Schicht (22) lösbar in Eingriff bringbar sind, wobei die zweite Schicht (22) mittels des Befestigungsteils (30) an einer Oberfläche (42) des Bauteils (40) befestigbar ist, und wobei die erste Schicht (12) ein größeres Flächengewicht und/oder eine größere Dichte aufweist als die zweite Schicht (22).

2. Sandwichplatte nach Anspruch 1,
**dadurch gekennzeichnet,**
**dass** die Eingriffselemente (38) hintergreifende Elemente, insbesondere Haken und/oder Pilzköpfe, sind.

3. Sandwichplatte nach Anspruch 1 oder 2,
**dadurch gekennzeichnet,**
**dass** die zweite Schicht (22) aus einem Vlies gebildet ist.

4. Sandwichplatte nach einem der Ansprüche 1 bis 3,
**dadurch gekennzeichnet,**
**dass** die Eingriffselemente (38) an einer ersten Seite (34) des Befestigungsteils (30) vorgesehen sind und dass das Befestigungsteil (30) an einer gegenüberliegenden zweiten Seite (36) mit einer Klebeschicht versehen ist.

5. Sandwichplatte nach einem der Ansprüche 1 bis 4,
**dadurch gekennzeichnet,**
**dass** das Befestigungsteil (30) ein flächenförmiges Element (32) aufweist, insbesondere als ein solches ausgebildet ist.

6. Sandwichplatte nach einem der Ansprüche 1 bis 5,
**dadurch gekennzeichnet,**
**dass** das Befestigungsteil (30) als selbstklebendes Klettband oder selbstklebende Klettfolie ausgebildet ist.

7. Sandwichplatte nach einem der Ansprüche 1 bis 6,
**dadurch gekennzeichnet,**
**dass** sich das Befestigungsteil (30) vollflächig entlang der zweiten Schicht (22) erstreckt.

8. Sandwichplatte nach einem der Ansprüche 1 bis 7,
**dadurch gekennzeichnet,**
**dass** das Befestigungsteil (30) einzelne Befestigungsstreifen und/oder Schichtstücke aufweist.

## Claims

1. A sound absorbing sandwich plate for attaching to a component (40) for sound deadening of the component (4) comprising
a first layer (12) and
a second layer (22) connected to the first layer (12), wherein the first layer (12) is arranged on the side of the second layer (22) that faces away from the component (40),
**characterized in that**
at least one mounting part (30) is at least partially provided along the second layer (22), in an areal manner, which mounting part (30) has a plurality of engaging elements (38), which are detachably engageable into the second layer (22), wherein the second layer (22) is attachable to a surface (42) of the component (40) through the mounting part (30), and wherein the first layer (12) has a larger area density and/or a larger density than the second layer (22).

2. The sandwich plate according to claim 1,
**characterized in that**
the engaging elements (38) are elements adapted to engage behind, especially hooks and/or mushroom heads.

3. The sandwich plate according to claim 1 or 2,
**characterized in that**
the second layer (22) is formed of a non-woven material.

4. The sandwich plate according to one of the claims 1 to 3,
**characterized in that**
the engaging elements (38) are provided at a first side (34) of the mounting part (30) and that the mounting part (30), on an opposite second side (36), is provided with an adhesive layer.

5. The sandwich plate according to one of the claims 1 to 4,
**characterized in that**
the mounting part (30) includes an area-shaped element (32), especially is formed as such.

6. The sandwich plate according to one of the claims 1 to 5,
**characterized in that**
the mounting part (30) is formed as self-adhesive hook tape or self-adhesive hook sheet.

7. The sandwich plate according to one of the claims 1 to 6,
**characterized in that**
the mounting part (30) extends along the second layer (22) in a full-area manner.

8. The sandwich plate according to one of the claims 1 to 7,
**characterized in that**,
the mounting part (30) has individual mounting strips and/or layer pieces.

## Revendications

1. Plaque sandwich d'amortissement acoustique destinée à être montée sur un composant (40) pour insonoriser le composant (40), comportant
une première couche (12) et
une seconde couche (22) reliée à la première couche (12), la première couche (12) étant agencée sur le côté de la seconde couche (22) détourné du composant (40),
**caractérisée en ce que**
il est prévu au moins partiellement au moins une partie de fixation (30) de façon surfacique le long de la seconde couche (22), qui présente une multitude d'éléments d'engagement (38) qui sont susceptibles d'être amenés en engagement détachable avec la seconde couche (22), la seconde couche (22) étant susceptible d'être fixée sur une surface (42) du composant (40) au moyen de la pièce de fixation (30), et la première couche (12) présente un poids surfacique et/ou une densité supérieur(e) à celui/celle de la seconde couche (22).

2. Plaque sandwich selon la revendication 1,
**caractérisée en ce que**
les éléments d'engagement (38) sont des éléments d'engagement par l'arrière, en particulier des crochets et/ou des têtes de champignon.

3. Plaque sandwich selon la revendication 1 ou 2,
**caractérisée en ce que**
la seconde couche (22) est formée par un non-tissé.

4. Plaque sandwich selon l'une des revendications 1 à 3,
**caractérisée en ce que**
les éléments d'engagement (38) sont prévus sur un premier côté (34) de la partie de fixation (30) et la partie de fixation (30) est pourvue d'une couche de colle sur un second côté opposé (36).

5. Plaque sandwich selon l'une des revendications 1 à 4,
**caractérisée en ce que**
la partie de fixation (30) présente un élément de forme surfacique (32) et est en particulier réalisée en tant que tel.

6. Plaque sandwich selon l'une des revendications 1 à 5,
**caractérisée en ce que**
la partie de fixation (30) est réalisée sous forme de bande auto-agrippante et autocollante ou sous forme de feuille auto-agrippante et autocollante.

7. Plaque sandwich selon l'une des revendications 1 à 6,
**caractérisée en ce que**
la partie de fixation (30) s'étend sur toute la surface le long de la seconde couche (22).

8. Plaque sandwich selon l'une des revendications 1 à 7,
**caractérisée en ce que**
la partie de fixation (30) présente des rubans de fixation et/ou des morceaux de couche individuels.
